# EUROPEAN PATENT SPECIFICATION

(11) **EP 4 607 557 B1**
(45) Date of publication and mention of the grant of the patent: **24.06.2026**
(21) Application number: 25305038.9
(22) Date of filing: 14.01.2025
(51) Int. Cl.: H01H 9/54, H02J 9/06

(54) **DUAL POWER SUPPLY TRANSFER SWITCH**
DOPPELSTROMVERSORGUNGSTRANSFERSCHALTER
COMMUTATEUR DE TRANSFERT D'ALIMENTATION DOUBLE

(30) Priority: 22.02.2024 CN 202420337257 U
(43) Date of publication of application: 27.08.2025
(73) Proprietor: SCHNEIDER ELECTRIC INDUSTRIES SAS, 92500 Rueil-Malmaison (FR)
(72) Inventor: ZHAO, Chaomin, Shanghai, 201203 (CN); BI, Baoyun, Shanghai, 201203 (CN); WU, Wei, Shanghai, 201203 (CN)
(74) Representative: Manitz Finsterwald Patent- und Rechtsanwaltspartnerschaft mbB

(56) References cited:
- CN-A- 116 937 774
- US-A1- 2022 239 074

## Description

### FIELD

Embodiments of the present disclosure generally relate to the technical field of electrical equipment, and more particularly, to a dual power supply transfer switch.

### BACKGROUND

An execution mechanism is disposed inside a dual power supply transfer switch, and the dual power supply transfer switch may complete switching of working modes through driving the execution mechanism, so that the dual power supply transfer switch is connected to or disconnected from different power supply ends.

In an application of a conventional dual power supply transfer switch, the execution mechanism generally includes an electromagnet. For a product with a large electric current level, since the execution mechanism needs a great force to act, in order to meet design requirements, volume of the electromagnet is relatively large in design, which increases difficulty of controlling the product and production assembly at the same time, resulting in an increase in design cost and production cost.

Document CN 116 937 774 discloses a dual power supply transfer switch, comprising a control circuit configured to generate an opening signal, a first closing signal and a second closing signal a transfer switch capable of switching between a first switching-on position and a second switching-on position.

### SUMMARY

An object of the present disclosure is to provide a dual power supply transfer switch to at least partially solve the above problems.

In an aspect of the present disclosure, there is provided a dual power supply transfer switch comprising a control circuit configured to generate an opening signal, a first closing signal and a second closing signal; a transfer switch capable of switching between a first switching-on position, an intermediate position and a second switching-on position; a first driving part cooperating with the transfer switch and electrically connected to the control circuit, wherein the first driving part drives the transfer switch to be opened from the first switching-on position or the second switching-on position to the intermediate position upon receiving the opening signal from the control circuit; and a pair of second driving parts each cooperating with the transfer switch and electrically connected to the control circuit, wherein one of the pair of second driving parts is capable of driving the transfer switch to be closed from the intermediate position to the first switching-on position upon receiving the first closing signal from the control circuit, and the other one of the pair of second driving parts is capable of driving the transfer switch to be closed from the intermediate position to the second switching-on position upon receiving the second closing signal from the control circuit.

The dual power supply transfer switch according to embodiments of the present disclosure drives the transfer switch to be opened to the intermediate position through the first driving part, and drives the transfer switch to be closed to the first switching-on position through one of the pair of second driving parts, and drives the transfer switch to be closed to the second switching-on position through the other second driving part. Whereby, the opening and closing of the dual power supply transfer switch according to the embodiments of the present disclosure are independently controlled, an electric current passing through the driving part is small, and a stress of the execution mechanism is small, thus optimizing volume of the execution mechanism, and reducing design cost and production cost.

In some embodiments, the dual power supply transfer switch further comprises a power selection circuit, an input end of the power selection circuit is electrically connected to a main power supply and a backup power supply to select a working power supply from the main power supply and the backup power supply, and an output end of the power selection circuit is electrically connected to the first driving part and the pair of second driving parts.

In some embodiments, the dual power supply transfer switch further comprises an energy storage motor electrically connected to the output end of the power selection circuit, the energy storage motor is electrically connected to the control circuit, wherein in a case that the energy storage motor completes energy storage, the control circuit is capable of generating the opening signal.

In some embodiments, the dual power supply transfer switch further comprises a power supply circuit, an input end of the power supply circuit is electrically connected to the main power supply and the backup power supply, and an output end of the power supply circuit is electrically connected to the control circuit.

In some embodiments, the dual power supply transfer switch further comprises: a first transformer disposed between the main power supply and the input end of the power supply circuit; and a second transformer disposed between the backup power supply and the input end of the power supply circuit.

In some embodiments, the dual power supply transfer switch further comprises a microswitch cooperating with the transfer switch, wherein in a case that the transfer switch is in the intermediate position, the microswitch is capable of generating a closing indication signal for indicating that the transfer switch is in the intermediate position.

In some embodiments, the microswitch is electrically connected to the control circuit, and in a case that the control circuit receives the closing indication signal from the microswitch, the control circuit is capable of generating the first closing signal or the second closing signal.

It should be understood that the content described in this section is not intended to limit the key features or important features of the embodiments of the present disclosure, nor is it intended to limit the scope of the present disclosure. Other features of the present disclosure will become readily understood from the following description.

### BRIEF DESCRIPTION OF DRAWINGS

The above and other features, advantages, and aspects of various embodiments of the present disclosure will become more apparent from the following detailed description taken in conjunction with the accompanying drawings. In the drawings, the same or similar reference numbers refer to the same or similar elements, wherein:

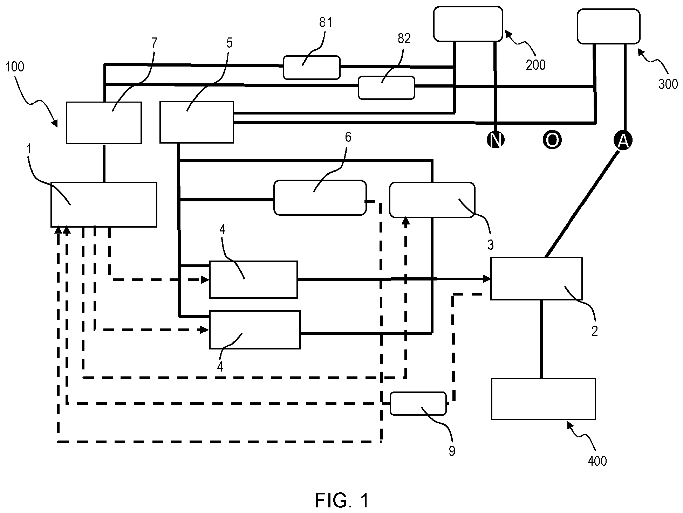

FIG. 1 shows a working principle diagram of a dual power supply transfer switch according to some embodiments of the present disclosure.

### Description of reference signs:

100 represents a dual power supply transfer switch; 200 represents a main power supply; 300 represents a backup power supply; 400 represents a load;
1 represents a control circuit; 2 represents a transfer switch; 3 represents a first driving part; 4 represents a second driving part; 5 represents a power selection circuit; 6 represents an energy storage motor; 7 represents a power supply circuit;
81 represents a first transformer, and 82 represents a second transformer;
9 represents a microswitch.

### DETAILED DESCRIPTION

Preferred embodiments of the present disclosure will be described in more detail below with reference to the accompanying drawings. While the preferred embodiments of the present disclosure are shown in the drawings, it should be understood that the present disclosure may be implemented in various forms and should not be limited by the embodiments set forth herein. Rather, these embodiments are provided to make this disclosure more thorough and complete, and to fully convey the scope of the present disclosure to those skilled in the art.

As used herein, the term "comprising" and variations thereof represent openness, i.e., "including but not limited to". Unless specifically stated, the term "or" means "and / or". The term "based on" means "based at least in part on". The terms "an example embodiment" and "an embodiment" mean "at least one example embodiment". The term "another embodiment" means "at least one further embodiment". The terms "first," "second," and the like may refer to different or identical objects.

As described above, for a product with a large electric current level, since the execution mechanism of the dual power supply transfer switch needs a great force to act, in order to meet design requirements, volume of the electromagnet is relatively large in design, which increases difficulty of controlling the product and production assembly at the same time, resulting in an increase in design cost and production cost. Embodiments of the present disclosure provide a dual power supply transfer switch 100 to at least partially solve the above problems. Hereinafter, the principles of the present disclosure will be described with reference to FIG. 1.

FIG. 1 shows a working principle diagram of a dual power supply transfer switch 100 according to some embodiments of the present disclosure. As shown in FIG. 1, the dual power supply transfer switch 100 described herein generally includes a control circuit 1, a transfer switch 2, a first driving part 3, a second driving part 4, a power selection circuit 5, an energy storage motor 6, a power supply circuit 7, a first transformer 81, a second transformer 82, and a microswitch 9.

Continuing to refer to FIG. 1, an end of the dual power supply transfer switch 100 can be connected to a main power supply 200 and a backup power supply 300, and the other end of the dual power supply transfer switch 100 can be connected to a load 400. Apparently, by switching the dual power supply transfer switch 100, it is possible to select a power supply in good condition for the load.

Continuing to refer to FIG. 1, further, the transfer switch 2 is capable of switching between a first switching-on position, an intermediate position and a second switching-on position. In a case that the transfer switch 2 is in the first switching-on position, the transfer switch 2 may be connected to the main power supply 200, therefore the main power supply 200 supplies power to the load 400. In a case that the transfer switch 2 is in the intermediate position, the transfer switch 2 is not connected to the main power supply 200 and the backup power supply 300, therefore the load 400 is not supplied with power. In a case that the transfer switch 2 is in the second switching-on position, the transfer switch 2 may be connected to the backup power supply 300, therefore the backup power supply 300 supplies power to the load 400.

Apparently, during the switching process of the transfer switch 2, it is necessary to firstly switch the transfer switch 2 to the intermediate position, therefore a priority of the intermediate position is higher, thereby increasing safety and reliability of the dual power supply transfer switch 100.

Continuing to refer to FIG. 1, in some embodiments, an input end of the power supply circuit 7 may be electrically connected to the main power supply 200 and the backup power supply 300, and an output end of the power supply circuit 7 may be electrically connected to the control circuit 1. Whereby, the main power supply 200 and the backup power supply 300 supply power to the control circuit 1 through the power supply circuit 7. The control circuit 1 serves a function of control, and the control circuit 1 may generate an opening signal, a first closing signal and a second closing signal for controlling the working process.

Continuing to refer to FIG. 1, in some embodiments, a first transformer 81 is disposed between the main power supply 200 and the input end of the power supply circuit 7; and a second transformer 82 is disposed between the backup power supply 300 and the input end of the power supply circuit 7. Whereby, the control circuit 1 may be supplied with power from two power supplies at the same time, and the control circuit 1 can work stably and reliably through operation of the transformer as long as one of the two power supplies is normal.

Continuing to refer to FIG. 1, in some embodiments, an input end of the power selection circuit 5 may be electrically connected to the main power supply 200 and the backup power supply 300, and the power selection circuit 5 can select a working power supply from the main power supply 200 and the backup power supply 300, and the working power supply is one in better condition of the main power supply 200 and the backup power supply 300. An output end of the power selection circuit 5 is electrically connected to the first driving part 3, the energy storage motor 6 and the pair of second driving parts 4, thereby supplying power to the first driving part 3, the energy storage motor 6 and the pair of second driving parts 4. Whereby, the first driving part 3, the energy storage motor 6 and the pair of second driving parts 4 can select an optimal power supply for supplying power, thereby improving success rate of switching and improving reliability of the product.

The power selection circuit 5 according to the embodiments of the present disclosure may be various types of power selection circuits currently known or available in the future, which is not limited in the embodiments of the present disclosure. For example, in some embodiments, the power selection circuit 5 may be a relay.

With Continuing to refer to FIG. 1, in some embodiments, the energy storage motor 6 may be electrically connected to the control circuit 1, wherein in a case that the energy storage motor 6 completes energy storage, the control circuit 1 is capable of receiving a preparation opening signal from the energy storage motor 6 and generating the opening signal. The first driving part 3 may cooperate with the transfer switch 2, and the first driving part 3 may be electrically connected to the control circuit 1, wherein the first driving part 3 drives the transfer switch 2 to be opened from the first switching-on position or the second switching-on position to the intermediate position in a case that the first driving part 3 receive the opening signal from the control circuit 1, thereby realizing opening operation of the dual power supply transfer switch 100.

It can be understood that, in a case that the energy storage motor 6 completes energy storage, the control circuit 1 can receive the prepared opening signal from the energy storage motor 6 and generate the opening signal, so as to perform the subsequent opening operation, thereby increasing success rate of transferring of the dual power supply transfer switch 100.

The first driving part 3 according to the embodiments of the present disclosure may be various types of driving parts currently known or available in the future, which is not limited in the embodiments of the present disclosure. For example, in some embodiments, the first driving part 3 may include a release, the release may include a coil and an armature, in a case that the coil is energized, the armature is driven, and then the transfer switch 2 is driven by the armature to act.

With Continuing to refer to FIG. 1, in some embodiments, the microswitch 9 may cooperate with the transfer switch 2, wherein in a case that the transfer switch 2 is in the intermediate position, the microswitch 9 is capable of generating a closing indication signal for indicating that the transfer switch 2 is in the intermediate position. The microswitch 9 may be electrically connected to the control circuit 1, and in a case that the control circuit 1 receives the closing indication signal from the microswitch 9, the control circuit 1 is capable of generating the first closing signal or the second closing signal, whereby the dual power supply transfer switch 100 may perform closing operation.

With Continuing to refer to FIG. 1, in some embodiments, the pair of second driving parts 4 may each cooperate with the transfer switch 2, and the pair of second driving parts 4 may each be electrically connected to the control circuit 1. In a case that one of the pair of second driving parts 4 receives the first closing signal from the control circuit 1, the second driving part 4 is capable of driving the transfer switch 2 to be closed from the intermediate position to the first switching-on position. In a case that the other second driving part 4 receives the second closing signal from the control circuit 1, the other second driving part 4 is capable of driving the transfer switch 2 to be closed from the intermediate position to the second switching-on position. That is, if one of the pair of second driving parts 4 is capable of being controlled by the first closing signal, the other second driving part 4 is capable of being controlled by the second closing signal.

The second driving part 4 according to the embodiments of the present disclosure may be various types of driving parts currently known or available in the future, which is not limited in the embodiments of the present disclosure. For example, in some embodiments, the second driving part 4 may include a release, the release may include a coil and an armature, in a case that the coil is energized, the armature is driven, and then the transfer switch 2 is driven by the armature to act.

Hereinafter, a principle of switching the dual power supply transfer switch 100 from the first switching-on position to the second switching-on position will be described in detail, and of course, the dual power supply transfer switch 100 is switched from the second switching-on position to the first switching-on position in the same way, which will not be repeated here.

The main power supply 200 and the backup power supply 300 may be buck into the power supply circuit 7, and the power supply circuit 7 supplies power to the control circuit 1. The energy storage motor 6 selects the optimal power supply through the power selection circuit 5. After the energy storage motor 6 completes energy storage, the control circuit 1 generates an opening signal. In a case that the first driving part 3 receives the opening signal from the control circuit 1, the first driving part 3 drives the transfer switch 2 to be opened from the first switching-on position to the intermediate position.

In a case that the transfer switch 2 is switched to the intermediate position, the microswitch 9 generates the closing indication signal for indicating that the transfer switch 2 is in the intermediate position. In a case that the control circuit 1 receives the closing indication signal from the microswitch 9, the control circuit 1 is capable of generating the second closing signal. In a case that the corresponding second driving part 4 receives the second closing signal from the control circuit 1, the second driving part 4 is capable of driving the transfer switch 2 to be closed from the intermediate position to the second switching-on position.

In summary, the dual power supply transfer switch 100 according to the embodiments of the present disclosure drives the transfer switch 2 to be opened to the intermediate position through the first driving part 3, and drives the transfer switch 2 to be closed to the first switching-on position through one of the pair of second driving parts 4, and drives the transfer switch 2 to be closed to the second switching-on position through the other second driving part 4. Whereby, the opening and closing of the dual power supply transfer switch 100 according to the embodiments of the present disclosure are independently controlled, an electric current passing through the driving part is small, and a stress of the execution mechanism is small, thus optimizing volume of the execution mechanism, and reducing the design cost and the production cost.

On the other hand, since the first driving part 3, the energy storage motor 6 and the pair of second driving parts 4 are all electrically connected to the output end of the power selection circuit 5, and an energy storage time period of the energy storage motor 6 and a working time period of the driving part are spaced apart from each other, the stress of front end components is reduced, reducing the impact on the power supply, thus optimizing the selection of components, reducing the cost and improving the reliability.

## Claims

1. A dual power supply transfer switch (100), comprising
a control circuit (1) configured to generate an opening signal, a first closing signal and a second closing signal;
a transfer switch (2) capable of switching between a first switching-on position, an intermediate position and a second switching-on position;
a first driving part (3) cooperating with the transfer switch (2) and electrically connected to the control circuit (1), wherein the first driving part (3) drives the transfer switch (2) to be opened from the first switching-on position or the second switching-on position to the intermediate position upon receiving the opening signal from the control circuit (1); and
a pair of second driving parts (4) each cooperating with the transfer switch (2) and electrically connected to the control circuit (1), wherein one of the pair of second driving parts (4) is capable of driving the transfer switch (2) to be closed from the intermediate position to the first switching-on position upon receiving the first closing signal from the control circuit (1), and the other one of the pair of second driving parts (4) is capable of driving the transfer switch (2) to be closed from the intermediate position to the second switching-on position upon receiving the second closing signal from the control circuit (1).

2. The dual power supply transfer switch (100) of claim 1, **characterized in that** the dual power supply transfer switch (100) further comprises a power selection circuit (5), an input end of the power selection circuit (5) is electrically connected to a main power supply (200) and a backup power supply (300) to select a working power supply from the main power supply (200) and the backup power supply (300), and an output end of the power selection circuit (5) is electrically connected to the first driving part (3) and the pair of second driving parts (4).

3. The dual power supply transfer switch (100) of claim 2, **characterized in that** the dual power supply transfer switch (100) further comprises an energy storage motor (6) electrically connected to the output end of the power selection circuit (5), the energy storage motor (6) is electrically connected to the control circuit (1), wherein in a case that the energy storage motor (6) completes energy storage, the control circuit (1) is capable of generating the opening signal.

4. The dual power supply transfer switch (100) of any of claims 1-3, **characterized in that** the dual power supply transfer switch (100) further comprises a power supply circuit (7), an input end of the power supply circuit (7) is electrically connected to the main power supply (200) and the backup power supply (300), and an output end of the power supply circuit (7) is electrically connected to the control circuit (1).

5. The dual power supply transfer switch (100) of claim 4, **characterized in that** the dual power supply transfer switch (100) further comprises:
a first transformer (81) disposed between the main power supply (200) and the input end of the power supply circuit (7); and
a second transformer (82) disposed between the backup power supply (300) and the input end of the power supply circuit (7).

6. The dual power supply transfer switch (100) of any of claims 1-5, **characterized in that** the dual power supply transfer switch further comprises a microswitch (9) cooperating with the transfer switch (2), wherein in a case that the transfer switch (2) is in the intermediate position, the microswitch (9) is capable of generating a closing indication signal for indicating that the transfer switch (2) is in the intermediate position.

7. The dual power supply transfer switch (100) of claim 6, **characterized in that** the microswitch (9) is electrically connected to the control circuit (1), and in a case that the control circuit (1) receives the closing indication signal from the microswitch (9), the control circuit (1) is capable of generating the first closing signal or the second closing signal.

## Patentansprüche

1. Doppelstromversorgungs-Umschalter (100), umfassend:
eine Steuerschaltung (1), die ausgebildet ist, um ein Öffnungssignal, ein erstes Schließsignal und ein zweites Schließsignal zu erzeugen;
einen Umschalter (2), der zwischen einer ersten Einschaltstellung, einer Zwischenstellung und einer zweiten Einschaltstellung umschalten kann;
einen ersten Antriebsteil (3), der mit dem Umschalter (2) zusammenwirkt und elektrisch mit der Steuerschaltung (1) verbunden ist, wobei der erste Antriebsteil (3) den Umschalter (2) antreibt, damit dieser bei Empfang des Öffnungssignals von der Steuerschaltung (1) aus der ersten Einschaltstellung oder der zweiten Einschaltstellung in die Zwischenstellung geöffnet wird; und
ein Paar zweiter Antriebsteile (4), die jeweils mit dem Umschalter (2) zusammenwirken und elektrisch mit der Steuerschaltung (1) verbunden sind, wobei eines des Paares zweiter Antriebsteile (4) in der Lage ist, den Umschalter (2) bei Empfang des ersten Schließsignals von der Steuerschaltung (1) aus der Zwischenstellung in die erste Einschaltstellung zu schließen, und das andere der beiden zweiten Antriebsteile (4) in der Lage ist, den Umschalter (2) bei Empfang des zweiten Schließsignals von der Steuerschaltung (1) aus der Zwischenstellung in die zweite Einschaltstellung zu schließen.

2. Doppelstromversorgungs-Umschalter (100) nach Anspruch 1, **dadurch gekennzeichnet, dass** der Doppelstromversorgungs-Umschalter (100) ferner eine Stromversorgungsauswahlschaltung (5) umfasst, wobei ein Eingangsende der Stromversorgungsauswahlschaltung (5) elektrisch mit einer Hauptstromversorgung (200) und einer Ersatzstromversorgung (300) verbunden ist, um eine Betriebsstromversorgung aus der Hauptstromversorgung (200) und der Ersatzstromversorgung (300) auszuwählen, und ein Ausgangsende der Stromversorgungsauswahlschaltung (5) elektrisch mit dem ersten Antriebsteil (3) und dem Paar zweiter Antriebsteile (4) verbunden ist.

3. Doppelstromversorgungs-Umschalter (100) nach Anspruch 2, **dadurch gekennzeichnet, dass** der Doppelstromversorgungs-Umschalter (100) ferner einen Energiespeichermotor (6) umfasst, der elektrisch mit dem Ausgangsende der Stromversorgungsauswahlschaltung (5) verbunden ist, der Energiespeichermotor (6) elektrisch mit der Steuerschaltung (1) verbunden ist, wobei, wenn der Energiespeichermotor (6) die Energiespeicherung abgeschlossen hat, die Steuerschaltung (1) in der Lage ist, das Öffnungssignal zu erzeugen.

4. Doppelstromversorgungs-Umschalter (100) nach einem der Ansprüche 1 bis 3, **dadurch gekennzeichnet, dass** der Doppelstromversorgungs-Umschalter (100) ferner eine Stromversorgungsschaltung (7) umfasst, wobei ein Eingangsende der Stromversorgungsschaltung (7) elektrisch mit der Hauptstromversorgung (200) und der Ersatzstromversorgung (300) verbunden ist, und ein Ausgangsende der Stromversorgungsschaltung (7) elektrisch mit der Steuerschaltung (1) verbunden ist.

5. Doppelstromversorgungs-Umschalter (100) nach Anspruch 4, **dadurch gekennzeichnet, dass** der Doppelstromversorgungs-Umschalter (100) ferner umfasst:
einen ersten Transformator (81), der zwischen der Hauptstromversorgung (200) und dem Eingangsende der Stromversorgungsschaltung (7) angeordnet ist; und
einen zweiten Transformator (82), der zwischen der Ersatzstromversorgung (300) und dem Eingangsende der Stromversorgungsschaltung (7) angeordnet ist.

6. Doppelstromversorgungs-Umschalter (100) nach einem der Ansprüche 1 bis 5, **dadurch gekennzeichnet, dass** der Doppelstromversorgungs-Umschalter ferner einen Mikroschalter (9) umfasst, der mit dem Umschalter (2) zusammenwirkt, wobei, wenn sich der Umschalter (2) in der Zwischenstellung befindet, der Mikroschalter (9) in der Lage ist, ein Schließanzeigesignal zu erzeugen, um anzuzeigen, dass sich der Umschalter (2) in der Zwischenstellung befindet.

7. Doppelstromversorgungs-Umschalter (100) nach Anspruch 6, **dadurch gekennzeichnet, dass** der Mikroschalter (9) elektrisch mit der Steuerschaltung (1) verbunden ist und dass die Steuerschaltung (1), wenn sie das Schließanzeigesignal vom Mikroschalter (9) empfängt, in der Lage ist, das erste Schließsignal oder das zweite Schließsignal zu erzeugen.

## Revendications

1. Commutateur de transfert à double alimentation (100), comprenant :
un circuit de commande (1) configuré pour générer un signal d'ouverture, un premier signal de fermeture et un deuxième signal de fermeture ;
un commutateur de transfert (2) capable de basculer entre une première position d'enclenchement, une position intermédiaire et une deuxième position d'enclenchement ;
une première partie d'entraînement (3) coopérant avec le commutateur de transfert (2) et connectée électriquement au circuit de commande (1), dans laquelle la première partie d'entraînement (3) commande le commutateur de transfert (2) pour qu'il s'ouvre depuis la première position d'enclenchement ou la deuxième position d'enclenchement vers la position intermédiaire lors de la réception du signal d'ouverture provenant du circuit de commande (1) ; et
une paire de deuxièmes parties d'entraînement (4) coopérant chacune avec le commutateur de transfert (2) et connectées électriquement au circuit de commande (1), dans laquelle l'une des deuxièmes parties d'entraînement (4) de la paire est capable de commander le commutateur de transfert (2) pour qu'il se ferme de la position intermédiaire à la première position d'enclenchement lors de la réception du premier signal de fermeture provenant du circuit de commande (1), et l'autre de la paire de deuxièmes parties d'entraînement (4) est capable d'entraîner le commutateur de transfert (2) pour qu'il se ferme de la position intermédiaire à la deuxième position d'enclenchement lors de la réception du deuxième signal de fermeture provenant du circuit de commande (1).

2. Commutateur de transfert à double alimentation (100) selon la revendication 1, **caractérisé en ce que** le commutateur de transfert à double alimentation (100) comprend en outre un circuit de sélection d'alimentation (5), une extrémité d'entrée du circuit de sélection d'alimentation (5) étant connectée électriquement à une alimentation principale (200) et à une alimentation de secours (300) pour sélectionner une alimentation de fonctionnement parmi l'alimentation principale (200) et l'alimentation de secours (300), et une extrémité de sortie du circuit de sélection d'alimentation (5) est connectée électriquement à la première partie d'entraînement (3) et à la paire de deuxièmes parties d'entraînement (4).

3. Commutateur de transfert à double alimentation (100) selon la revendication 2, **caractérisé en ce que** le commutateur de transfert à double alimentation (100) comprend en outre un moteur de stockage d'énergie (6) connecté électriquement à l'extrémité de sortie du circuit de sélection d'alimentation (5), le moteur de stockage d'énergie (6) est connecté électriquement au circuit de commande (1), dans lequel, dans le cas où le moteur de stockage d'énergie (6) achève le stockage d'énergie, le circuit de commande (1) est capable de générer le signal d'ouverture.

4. Commutateur de transfert à double alimentation (100) selon l'une quelconque des revendications 1 à 3, **caractérisé en ce que** le commutateur de transfert à double alimentation (100) comprend en outre un circuit d'alimentation (7), dont une extrémité d'entrée est connectée électriquement à l'alimentation principale (200) et à l'alimentation de secours (300), et une extrémité de sortie du circuit d'alimentation (7) est connectée électriquement au circuit de commande (1).

5. Commutateur de transfert à double alimentation (100) selon la revendication 4, **caractérisé en ce que** le commutateur de transfert à double alimentation (100) comprend en outre :
un premier transformateur (81) disposé entre l'alimentation principale (200) et l'extrémité d'entrée du circuit d'alimentation (7) ; et
un deuxième transformateur (82) disposé entre l'alimentation de secours (300) et l'extrémité d'entrée du circuit d'alimentation (7).

6. Commutateur de transfert à double alimentation (100) selon l'une quelconque des revendications 1 à 5, **caractérisé en ce que** le commutateur de transfert à double alimentation comprend en outre un micro-interrupteur (9) coopérant avec le commutateur de transfert (2), dans lequel, dans le cas où le commutateur de transfert (2) se trouve en position intermédiaire, le micro-interrupteur (9) est capable de générer un signal d'indication de fermeture pour indiquer que le commutateur de transfert (2) se trouve en position intermédiaire.

7. Commutateur de transfert à double alimentation (100) selon la revendication 6, **caractérisé en ce que** le micro-interrupteur (9) est connecté électriquement au circuit de commande (1), et dans le cas où le circuit de commande (1) reçoit le signal d'indication de fermeture provenant du micro-interrupteur (9), le circuit de commande (1) est capable de générer le premier signal de fermeture ou le deuxième signal de fermeture.
